# EUROPÄISCHE PATENTANMELDUNG

(11) **EP 1 610 014 A1**
(43) Veröffentlichungstag der Anmeldung: **28.12.2005**
(21) Anmeldenummer: 05011878.5
(22) Anmeldetag: 02.06.2005
(51) Int. Cl.: F16D 3/10, F01L 1/34, F01L 1/356, F16D 3/04

(54) **Ventiltrieb einer Brennkraftmaschine**

(30) Priorität: 25.06.2004 DE 102004030773
(71) Anmelder: Bayerische Motoren Werke Aktiengesellschaft, 80809 München (DE)
(72) Erfinder: Gartner, Jurij, 82110 Germering (DE)

(57) **Zusammenfassung**

Es wird ein Ventiltrieb einer Brennkraftmaschine vorgeschlagen, mit einer drehbaren Antriebswelle (2) und mindestens einer damit betätigbaren drehbaren Nocke (8), die an einer ersten Drehachse drehbar ist, wobei eine Drehung der Antriebswelle (2) mittels mindestens einem, eine zweite Drehachse aufweisenden ersten Übertragungselement (6) und einem zweiten Übertragungselement (7) auf die Nocke (8) übertragbar ist und die Lage der zweiten Drehachse relativ zur ersten Drehachse veränderbar ist, wobei die Antriebswelle (2) geteilt ausgebildet ist und zwischen den Antriebswellenteilen (3, 4) eine einen Achsversatz ausgleichende Kupplung (5) vorgesehen ist.

## Beschreibung

Die vorliegende Erfindung betrifft einen Ventiltrieb einer Brennkraftmaschine nach dem Oberbegriff des Anspruchs 1.

Ventiltriebe für Brennkraftmaschinen sind bereits in vielfachen Ausführungsformen bekannt geworden. Bei seit langer Zeit bekannten Ventiltrieben ist es weder möglich, den Ventilhub, noch die Ventilöffnungszeit während des Betriebs der Brennkraftmaschine zu verändern. Neben variablen Ventiltrieben, bei denen beispielsweise die Phasenlage, der Ventilhub, die Steilheit der Öffnungs- und Schließflanke oder auch die Öffnungsdauer modifiziert werden kann, sind den jeweiligen Anforderungen der damit betriebenen Brennkraftmaschinen entsprechende Ventiltriebe bekannt geworden, die eine geringere Parametervariation zulassen, dafür aber konstruktiv einfacher ausgebildet sind.

Ein Beispiel eines Ventiltriebs für eine Brennkraftmaschine, mit dem die Ventilöffnungsdauer variiert werden kann, ist in der Europäischen Patentschrift EP 0 865 566 B1 beschrieben. Ein weiteres Beispiel eines solchen Ventiltrieb für eine Brennkraftmaschine ist in der auf die Anmelderin zurückgehenden unveröffentlichten Deutschen Patentanmeldung 103 06 154 beschrieben.

Diese Patentanmeldung beschreibt einen Ventiltrieb für eine Brennkraftmaschine, der eine Antriebswelle besitzt, mit der ein Nockenpaar in Drehung versetzt werden kann und zwar mittels Betätigung eines ersten Übertragungselementes, welches phasenstarr mit der Antriebswelle gekoppelt ist und eines zweiten Übertragungselementes, welches so mit dem ersten Übertragungselement und dem Nockenpaar gekoppelt ist, dass mittels einer Veränderung der Lage der Drehachse der ersten Übertragungselemente relativ zur Lage der Drehachse der Nocken eine Veränderung der Drehwinkelgeschwindigkeit der Nocken relativ zur Antriebswelle erreicht werden kann, um somit der Belastungssituation des Motors entsprechend die Ventilöffnungszeiten zu modifizieren sind.

Bei diesem bekannten Ventiltrieb wird dabei die Lageveränderung der zweiten Drehachse relativ zur ersten Drehachse mittels einer Verlagerung der Antriebswelle herbeigeführt. Da die Antriebswelle über ein Zugmittel in der Form beispielsweise einer Kette oder eines Zahnriemens angetrieben wird, ist es bei dieser Anordnung erforderlich, die Lageveränderung der Antriebswelle im Zugtrumm des Zeugmittels zu kompensieren, also beispielsweise dem Kettenspanner. Die Lageveränderung der Antriebswelle führt auch zu einer Veränderung ihrer Lage relativ zur Kurbelwelle, so dass auch noch eine entsprechende Korrektur durch den Phasenversteller herbeigeführt werden muss.

Ausgehend hiervon liegt der vorliegenden Erfindung nunmehr die Aufgabe zugrunde, einen Ventiltrieb einer Brennkraftmaschine zu schaffen, bei dem die Verstellung des variablen Ventiltriebs nicht durch das Spannmittel und den Phasensteller kompensiert werden muss.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung sieht einen Ventiltrieb einer Brennkraftmaschine vor, wobei der Ventiltrieb eine drehbare Antriebswelle und mindestens eine über die Antriebswelle betätigbare drehbare Nocke aufweist, die an einer ersten Drehachse drehbar ist, wobei eine Drehung der Antriebswelle mittels mindestens einem, eine zweite Drehachse aufweisenden ersten Übertragungselement und einem zweiten Übertragungselement auf die Nocke übertragen werden kann und die Lage der zweiten Drehachse relativ zur ersten Drehachse veränderbar ist, wobei die Antriebswelle geteilt ausgebildet ist und zwischen den Antriebswellenteilen eine einen Achsversatz ausgleichende Kupplung vorgesehen ist.

Es bedeutet dies mit anderen Worten, dass die Antriebswelle geteilt ausgebildet ist, so dass eine Lageveränderung der zweiten Drehachse relativ zur ersten Drehachse nicht zu einer Lageveränderung der vollständigen Antriebswelle führt, sondern nur mehr zu einer Lageveränderung eines Teils der Antriebswelle und somit der sich einstellende Achsversatz zwischen den beiden Antriebswellenteilen mittels der dazwischen angeordneten Kupplung ausgeglichen wird. Die nach der Erfindung zwischen den Antriebswellenteilen vorgesehene Kupplung ist dabei vorzugsweise so ausgebildet, dass sie eine Drehungleichförmigkeit zwischen achsversetzten Antriebswellenteilen vermeidet.

Nach einer vorteilhaften Ausführungsform kann es sich bei dieser Kupplung beispielsweise um eine Kreuzkupplung handeln, die bei jeder Verstellung der beiden Drehachsen relativ zueinander für die Aufrechterhaltung gleicher Drehwinkelgeschwindigkeiten zwischen den beiden Antriebswellenteilen sorgt.

Der nach der Erfindung vorgesehene Ventiltrieb wird im Bereich des Zylinderkopfes des damit versehenen Motors angeordnet und unterliegt in Abhängigkeit der Drehzahl des Motors hohen Relativgeschwindigkeiten zwischen den bewegbaren Bauteilen, so dass es von Bedeutung ist, eine aktive Schmierstoffzuführung zu den einzelnen bewegbaren Bauteilen vorzusehen. Zu diesem Zweck weisen die Antriebswellenteile eine Schmierstoffversorgungsbohrung zur Zufuhr von Schmierstoff an die bewegbaren Bauteile des Ventiltriebs auf.

Da es im Bereich der Trennebene zwischen den beiden Antriebswellenteilen zu einem Achsversatz kommt und damit auch zu einem Versatz der beiden Hälften der Schmierstoffversorgungsbohrung zueinander, ist es nach der Erfindung auch vorgesehen, dass die Schmierstoffversorgungsbohrung im Bereich der Kupplung eine weitgehend fluiddichte Hülse zur Durchleitung von Schmierstoff zwischen den Antriebswellenteilen besitzt. Damit wird in vorteilhafter Weise vermieden, dass ein Schmierstoffstrom aus einer Hälfte der Antriebswelle stumpf gegen das diesem Wellenende zugeordnete Wellenende des anderen Antriebswellenteils stößt.

Die Anordnung der Hülse in den beiden Antriebswellenteilen kann dabei mittels einer vorbestimmten Passung erfolgen, so dass es durch die Ausbildung dieser Passung auch möglich ist, eine vorbestimmte Menge an Schmierstoffen im Bereich der Kupplung an den einander zugeordneten Enden der Schmierstoffversorgungsbohrung austreten zu lassen, die zur Schmierung der Kreuzkupplung bzw. der damit in Relativverbindung stehender Wellenenden der beiden Antriebswellenteile zur Verfügung steht.

Es ist nach der Erfindung aber auch möglich, dass die Hülse mindestens eine Bohrung aufweist zum Austritt einer vorbestimmten Menge an Schmierstoff im Bereich der Kupplung, so dass damit eine ausreichende Schmierung im Bereich der relativ zueinander beweglichen Teile der Kupplung und der Antriebswellenteile möglich ist.

Schließlich ist es nach der Erfindung aber auch vorgesehen, das zur Aufrechterhaltung der Schmierstoffzufuhr zu den weiteren zueinander in Relativbewegung befindlichen Bauteile des Ventiltriebs der das mindestens eine erste Übertragungselement aufnehmende Antriebswellenteil mindestens eine Bohrung zum Austritt von Schmierstoff aus der Schmierstoffversorgungsbohrung zur Schmierung des Kontaktbereichs zwischen dem ersten und zweiten Übertragungselement sowie dem zweiten Übertragungselement und der Nocke aufweist.

Die Erfindung wird im Folgenden anhand der Zeichnung näher erläutert. Diese zeigt in:
Fig. 1 einen Ventiltrieb gemäß einer Ausführungsform nach der vorliegenden Er- findung in einer teilweisen Explosions- bzw. Schnittdarstellung ohne Achsversatz;
Fig. 2 eine Darstellung ähnlich derjenigen nach Fig. 1 mit Achsversatz; und
Fig. 3 in einer vergrößerten Darstellung eine Kreuzkupplung zur Kopplung der beiden Antriebswellenteile.

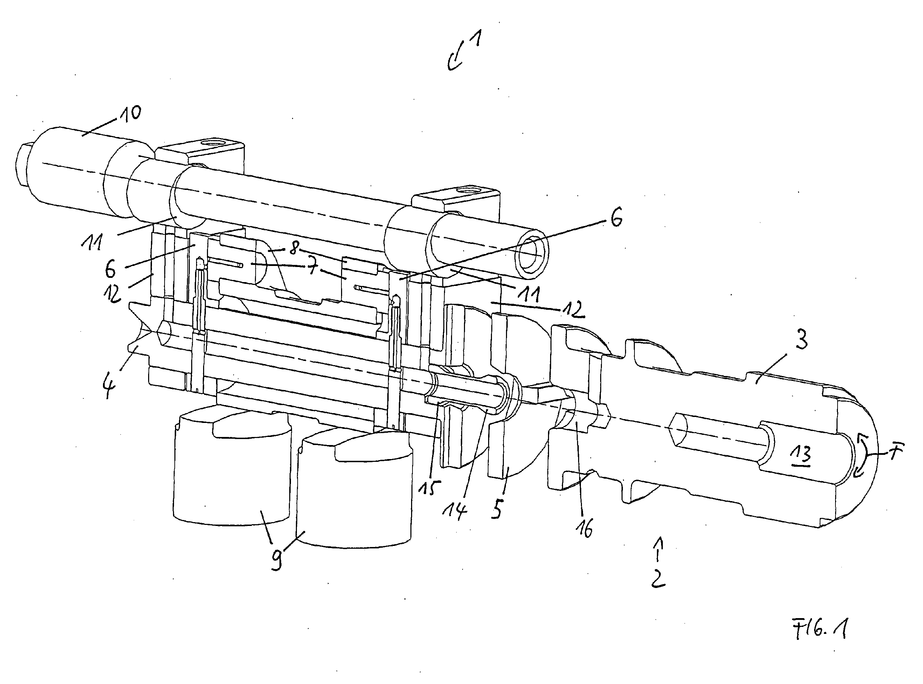

Fig. 1 der Zeichnung zeigt in einer teilweisen Explosions- bzw. Schnittdarstellung eine Ausführungsform eines Ventiltriebs nach der vorliegenden Erfindung.

Der ganz allgemein mit dem Bezugszeichen 1 bezeichnete Ventiltrieb weist eine geteilt ausgebildete Antriebswelle 2 auf, so dass sich zwei Antriebswellenteile 3, 4 ergeben.

Über ein nicht näher gezeigtes Antriebsmittel in der Form beispielsweise einer Kette und ein Kettenrad kann die Antriebswelle 2 in Drehbewegung versetzt werden entsprechend dem Doppelpfeil F. Die auf diese Weise in das Antriebswellenteil 3 eingekoppelte Drehbewegung wird über eine Kreuzkupplung 5 in das Antriebswellenteil 4 eingekoppelt.

Das Antriebswellenteil 4 überträgt seine Drehbewegung über ein erstes mit dem Antriebswellenteil 4 drehfest verbundenes Übertragungselement 6 auf ein zweites mit dem ersten Übertragungselement 6 gekoppeltes zweites Übertragungselement 7. Wie es anhand der Zeichnung ohne weiteres ersichtlich ist, greift das zweite Übertragungselement 7 in eine Nocke 8 ein, so dass die in das Antriebswellenteil 3 eingekoppelte Drehbewegung letztlich zu einer Drehbewegung der Nocke 8 führt. Bei dem in der Zeichnung dargestellten Ausführungsbeispiel eines erfindungsgemäßen Ventiltriebs sind jeweils zwei erste Übertragungselemente 6, zweite Übertragungselemente 7 und Nocken 8 vorgesehen, so dass damit beispielsweise ein Einlassventilpaar eines Zylinders einer mehrzylindrigen Brennkraftmaschine betätigt werden kann.

Die Betätigung der Einlassventilschäfte findet dabei über Tassenstössel mit hydraulisch arbeitenden Ventilspielausgleichselementen 9 statt. Mittels einer Drehung der beispielsweise im Zylinderkopf des Motors gelagerten Exzenterwelle 10 kann die Drehachse der ersten Übertragungselemente 6 relativ zur Drehachse der Nocken 8 verlagert werden und damit die Winkelgeschwindigkeit der Nocken 8 relativ zur Winkelgeschwindigkeit des Antriebswellenteils 4 verändert werden und damit die Ventilöffnungszeit verändert werden.

Fig. 1 der Zeichnung zeigt eine Stellung des Ventiltriebs mit zwei sich deckenden Drehachsen des Antriebswellenteils 3 bzw. des Antriebswellenteils 4.

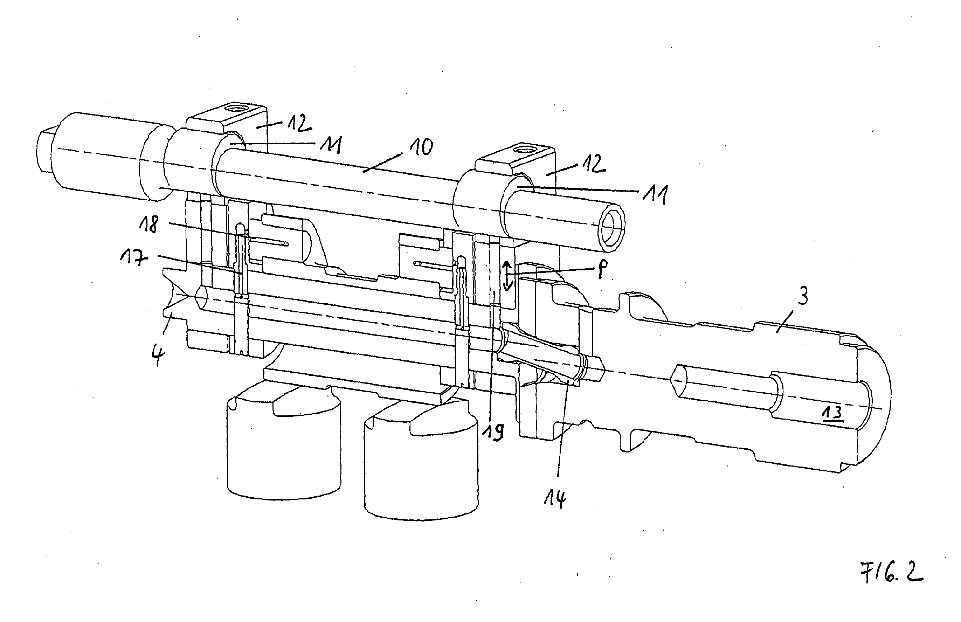

Wie es ohne weiteres anhand von Fig. 2 der Zeichnung ersichtlich ist, wurde zur Herbeiführung des Zustandes, zu dem sich die beiden Drehachsen des Antriebswellenteils 3 und des Antriebswellenteils 4 nicht mehr überdecken, die Exzenterwelle 10 um 180 Grad verdreht, so dass über die beiden Exzenter 11 der Exzenterwelle 10 die Lagerböcke 12 in Richtung des Doppelpfeiles P verschoben wurden. Diese Verlagerung führt auch zu einer Verlagerung des Antriebswellenteils 4 der Antriebswelle 2 und damit zu einer Verlagerung der Drehachse der beiden ersten Übertragungselemente 6 relativ zu der Drehachse der beiden Nocken 8. Über die näher anhand von Fig. 1 ersichtliche Kreuzkupplung 5 wird eine Drehbewegung des Antriebswellenteils 3 mit gleicher Winkelgeschwindigkeit in das Antriebswellenteil 4 eingekoppelt und somit wiederum auf die ersten Übertragungselemente 6 bzw. zweiten Übertragungselemente 7 und damit auf die beiden Nocken 8.

Wie es ohne weiteres anhand der Zeichnung ersichtlich ist, weist die Antriebswelle 2 sowohl im Antriebswellenteil 3 als auch im Antriebswellenteil 4 eine Schmierstoffversorgungsbohrung 13 auf, über die Schmierstoff zu allen bewegbaren Bauteilen des Ventiltriebs 1 gelangen kann. Da es im Bereich der Kreuzkupplung 5 und der damit vorhandenen Trennschwelle zwischen den beiden Antriebswellenteilen 3 und 4 zu einem Entweichen des Schmierstoffes gelangen kann, ist im Bereich der Kreuzkupplung 5 eine weitgehend fluiddichte Hülse 14 in der Form einer Doppelgelenkhülse vorgesehen, die in geschliffenen zylindrischen Bohrungen 15, 16 der beiden einander zugeordneten Enden der Antriebswellenteile 3, 4 vorgesehen ist. Damit wird über die beispielsweise aus einem Kunststoffwerkstoff gefertigte Doppelgelenkshülse 14, die sich in den beiden geschliffenen zylindrischen Bohrungen 15, 16 frei bewegen kann, erreicht, dass über die Schmierstoffversorgungsbohrung 13 eingebrachter Schmierstoff zu den im ersten Übertragungselement 6 bzw. zweiten Übertragungselement 7 ausgebildeten Schmierstoffversorgungsbohrungen 17 bzw. 18 gelangen kann und von der Schmierstoffversorgungsbohrung 18 aus auch über einen nicht näher dargestellten Kanal auch in den Bereich zwischen der Außenfläche des zweiten Übertragungselements 7 und der zugehörigen Innenbohrung der Nocke 8. Über den innerhalb der Lager 12 verlaufenden Schmierstoffkanal 19 kann die Schmierstoffversorgungsbohrung 13 des zweiten Antriebswellenteils 4 auch zu den Exzenterflächen 11 der Exzenterwelle 10 gelangen.

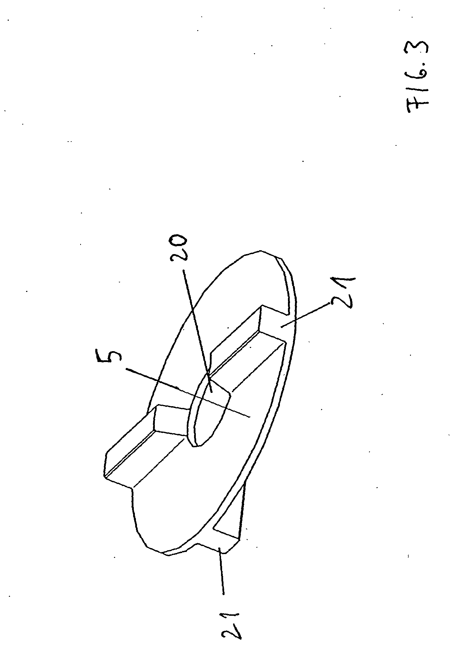

Fig. 3 der Zeichnung schließlich zeigt die in Fig. 1 ersichtliche Kreuzkupplung 5 in vergrößerter Darstellung.

Die Bohrung 20 der Kreuzkupplung 5 dient der Durchführung der Doppelgelenkshülse 14 und die querschnittlich rechteckförmigen Flächen 21 der Kreuzkupplung 5 dienen der Übertragung der Drehkraft vom Antriebswellenteil 3 auf das Antriebswellenteil 4. Über eine Relativbewegung zwischen den Flächen 21 und den entsprechend ausgebildeten mit Nuten versehenen Stirnflächen der zugeordneten Stirnseiten der Antriebswellenteile 3, 4 wird über die Kreuzkupplung 5 der Achsversatz zwischen den beiden Antriebswellenteilen 3, 4 ausgeglichen. Wie es vorstehend erwähnt wurde, wird die Doppelgelenkshülse 14 in zylindrische geschliffene Bohrungen 15, 16 der beiden Antriebswellenteile 3, 4 eingesetzt, so dass es über eine entsprechende Ausbildung dieser Passung möglich ist, eine beabsichtigte Leckage an Schmierstoff vorzusehen, die die Kontaktflächen der Kreuzkupplung 5 und den beiden Antriebswellenteilen 3, 4 schmiert. Alternativ hierzu ist es auch möglich, die Doppelgelenkshülse mit einer Querbohrung zu versehen, die einen definierten Austritt von Schmierstoff im Bereich der Kreuzkupplung 5 ermöglicht, um die Kontaktflächen zwischen der Kreuzkupplung 5 und den Antriebswellenteilen 3, 4 mit Schmierstoff zu versorgen.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1.: Ventiltrieb
- 2.: Antriebswelle
- 3.: Antriebswellenteil
- 4.: Antriebswellenteil
- F: Doppelpfeil
- 5.: Kreuzkupplung
- 6.: erstes Übertragungselement
- 7.: zweites Übertragungselement
- 8.: Nocke
- 9.: Ventilspielausgleichselement
- 10.: Exzenterwelle
- 11.: Exzenter
- 12.: Lager
- P: Doppelpfeil
- 13.: Schmierstoffversorgungsbohrung
- 14.: Doppelgelenkhülse
- 15.: Bohrung
- 16.: Bohrung
- 17.: Schmierstoffversorgungsbohrung
- 18.: Schmierstoffversorgungsbohrung
- 19.: Schmierstoffkanal
- 20.: Bohrung
- 21.: Fläche

## Patentansprüche

1. Ventiltrieb einer Brennkraftmaschine, mit einer drehbaren Antriebswelle (2) und mindestens einer damit betätigbaren drehbaren Nocke (8), die an einer ersten Drehachse drehbar ist, wobei eine Drehung der Antriebswelle (2) mittels mindestens einem, eine zweite Drehachse aufweisenden ersten Übertragungselement (6) und einem zweiten Übertragungselement (7) auf die Nocke (8) übertragbar ist und die Lage der zweiten Drehachse relativ zur ersten Drehachse veränderbar ist, **dadurch gekennzeichnet, dass** die Antriebswelle (2) geteilt ausgebildet ist und zwischen den Antriebswellenteilen (3, 4) eine einen Achsversatz ausgleichende Kupplung (5) vorgesehen ist.

2. Ventiltrieb nach Anspruch 1, **dadurch gekennzeichnet, dass** die Kupplung (5) so ausgebildet ist, dass sie eine Drehungleichförmigkeit zwischen achsversetzten Antriebswellenteilen (3, 4) vermeidet.

3. Ventiltrieb nach Anspruch 1 oder 2, **dadurch gekennzeichnet, dass** die Kupplung (5) als Kreuzkupplung ausgebildet ist.

4. Ventiltrieb nach einem der vorstehenden Ansprüche, **dadurch gekennzeichnet, dass** die Antriebswellenteile (3, 4) eine Schmierstoffversorgungsbohrung (13) zur Zufuhr von Schmierstoff an bewegbare Bauteile des Ventiltriebs (1) aufweisen.

5. Ventiltrieb nach Anspruch 4, **dadurch gekennzeichnet, dass** die Schmierstoffversorgungsbohrung (13) im Bereich der Kupplung (5) eine weitgehende fluiddichte Hülse (14) zur Durchleitung von Schmierstoff zwischen den Antriebswellenteilen (3, 4) besitzt.

6. Ventiltrieb nach Anspruch 5, **dadurch gekennzeichnet, dass** die Hülse (14) zum Austritt einer vorbestimmten Menge an Schmierstoff im Bereich der Kupplung (5) an den Enden mittels einer vorbestimmten Passung in die Schmierstoffversorgungsbohrung (13) eingesetzt ist.

7. Ventiltrieb nach Anspruch 5 oder 6, **dadurch gekennzeichnet, dass** die Hülse (14) mit mindestens einer Bohrung zum Austritt einer vorbestimmten Menge an Schmierstoff im Bereich der Kupplung (5) ausgebildet ist.

8. Ventiltrieb nach einem der vorstehenden Ansprüche, **dadurch gekennzeichnet, dass** der das mindestens eine erste Übertragungselement (6) aufnehmende Antriebswellenteil (4) mindestens eine Bohrung (19) zum Austritt von Schmierstoff zur Schmierung des Kontaktbereichs zwischen ersten (6) und zweitem (7) Übertragungselement sowie zweitem Übertragungselement (7) und Nocke (8) aufweist.
